# EUROPEAN PATENT SPECIFICATION

(11) **EP 1 550 536 B1**
(45) Date of publication and mention of the grant of the patent: **06.08.2008**
(21) Application number: 03791178.1
(22) Date of filing: 27.02.2003
(51) Int. Cl.: B29B 17/00, C08J 11/08

(54) **METHOD FOR RECYCLING FOAMED POLYSTYROL RESIN**
VERFAHREN ZUM RECYCELN VON GESCHÄUMTEM POLYSTYROLHARZ
PROCEDE DE RECYCLAGE DE RESINE DE POLYSTYROL MOUSSE

(30) Priority: 28.08.2002 JP 2002248069
(43) Date of publication of application: 06.07.2005
(73) Proprietor: JFE Engineering Corporation, Tokyo 100-0005 (JP); Shin-Etsu Chemical Co., Ltd., Chiyoda-ku, Tokyo 100-0004 (JP)
(72) Inventor: SEKI, Masahiko c/o JFE Engineering Corporation, Tokyo 100-0005 (JP); YUUKI, Toshihiro c/o YUUKI CORPORATION, Niigata-shi, Niigata 950-3134 (JP); FUKUNAGA, Takeshi c/o SHIN-ETSU CHEMICAL CO., LTD., Tokyo 100-0004 (JP); KOBAYASHI, Taishi c/o Specialty Chem. Res. Ctr., Kubiki-ku, Joetsu-shi Niigata 942-0091 (JP)
(74) Representative: Goddard, David John
(86) International application number: PCT/JP2003/002237
(87) International publication number: WO 2004/020167

(56) References cited:
- WO-A1-93/22119
- BE-A6- 1 010 614
- FR-A- 1 333 122
- FR-A1- 2 585 282
- JP-A- 5 185 430
- JP-A- 2000 212 325
- JP-A- 2000 256 502
- JP-A- 2000 309 659
- JP-A- 2001 106 825
- JP-A- 2001 164 035
- JP-A- 2003 064 216
- US-A- 5 534 207
- US-A- 5 824 709
- US-B1- 6 270 330

## Description

### TECHNICAL FIELD

The present invention relates to a recycling method of expanded polystyrene. More specifically, the invention relates to a method of recycling the high-quality resin for expanded polystyrene from waste materials of molded or formed products of expanded polystyrene. The present invention also pertains to a separation and recovery apparatus of a polystyrene solution for separating and recovering a solvent, from a polystyrene solution in which expanded polystyrene has been dissolved in the solvent.

### RELATED ART

Expanded polystyrene is used in large quantities as various packaging materials of household electric appliances, and also as building materials. Recycle of expanded polystyrene chips or used molded or formed products of expanded polystyrene is becoming a big problem in view of environmental conservation and economical efficiency.

Upon recycling use of expanded polystyrene, there are usually two problems. One is that expanded polystyrene is bulky and transportation of it as is requires a high cost. Volume reduction of expanded polystyrene prior to transportation is desired. The other one is that quality deterioration occurs owing to dusts or foreign matters mixed during the regeneration procedure of expanded polystyrene and reduction of molecular weight caused by heating mainly during the treatment.

For the regeneration of expanded polystyrene, two methods, when classified roughly, has been proposed: heat melting method and dissolution method by solvent. These methods however are not satisfactory for overcoming the above-described problems.

In the heat melting method, expanded polystyrene waste which has been bulky owing to expansion is melted by heating to reduce its volume into a resin mass (ingot) having a higher density, crushing the volume-reduced resin into pieces of a proper size, throwing them in an extruder, and extruding them into pellets while heating. At the volume reduction by heat melting, the apparent density of the resin becomes about 1.0 g/cm³. As a variation of the method, operations from volume reduction by heat melting to pelletization are carried out in one step in an extruder after crushing the expanded polystyrene waste if necessary.

In the heat melting method, foreign matters may be removed using a screen in the final step of extrusion into pellets, but the filtration of the semi-solid resin does not completely remove therefrom the foreign matters. It is therefore necessary to remove the foreign matters from expanded polystyrene before heat melting. Since foreign matters mixed in the expanded polystyrene waste must be removed manually, it is difficult to remove foreign matters in the heat melting method.

Moreover, in the heat melting method, reduction of the molecular weight of the resin tends to occur due to heating. It leads to a quality deterioration of the molded or formed products of recycled expanded polystyrene such as reduction of tensile strength or impact resistance.

On the other hand, in the dissolution method by solvent, expanded polystyrene is volume-reduced by dissolving it in an organic solvent, pouring the resulting solution into an extruder, mixing the solution under heat to melt the resin while evaporating and removing the solvent, and preparing the extruded product in the form of pellets. As the solvent, chlorinated hydrocarbon, limonene, THF and the like are proposed. Examples of the dissolution method by solvent include those as disclosed in Japanese Patent Provisional Publication No. 10-330530 and Japanese Patent Provisional Publication No. 2000-334738.

In the dissolution method by solvent, it is possible to filter the resin in the dissolved liquid form, so the method is suited for the removal of foreign matters. In addition, deterioration in quality of the recycled products owing to reduction of the molecular weight occurs less, because heating is conducted at not so high temperature. It, however, requires a step of efficiently removing the solvent from a solution containing the resin dissolved therein. In addition, since the method uses a solvent, an extra facility or person handling the solvent is required throughout the steps for recycling of expanded polystyrene. In particular, when extrusion is conducted at another plant after volume reduction using an organic solvent, transportation of the solvent is inevitable; this leads to a rise in the transportation cost.

Expanded polystyrene contains therein a large amount of a gas as bubbles. The gas is emitted upon dissolution. Together with the emitted gas, a vaporized solvent also flows out of the apparatus. When a solvent is used in the volume reducing step of expanded polystyrene, the solvent is released from the apparatus together with a large amount of the gas. When the solvent has a low-boiling-point, loss of the solvent cannot be neglected. Also from the viewpoint of environmental conservation, release of such a vaporized solvent out of the apparatus is not preferred and must be prevented. A solvent recovery apparatus therefore becomes necessary in order to prevent the loss of the solvent. Dissolution of expanded polystyrene on a too small scale is therefore not economical from the viewpoints of facilities and management and cannot be realized.

Dissolution of expanded polystyrene at a place where the waste occurs is proposed because it is bulky and has low transport efficiency (Japanese Patent Provisional Publication No. 11-181144 and Japanese Patent Provisional Publication No. 2000-154275). The method is however accompanied with the problems that the small recycling scale is not practical from the viewpoints of facilities and management and simultaneous transportation of the solvent raises the transportation cost.

Regardless of the specific recycling method, there is generally a demand for the reduction in the volume of expanded polystyrene for transportation or storage of it. Long distance transportation of expanded polystyrene used as packaging materials or expanded polyethylene waste such as chips remaining after production of its molded or formed products inevitably heightens the recycling cost. An object of the present invention is to overcome the problems which the prior art has.

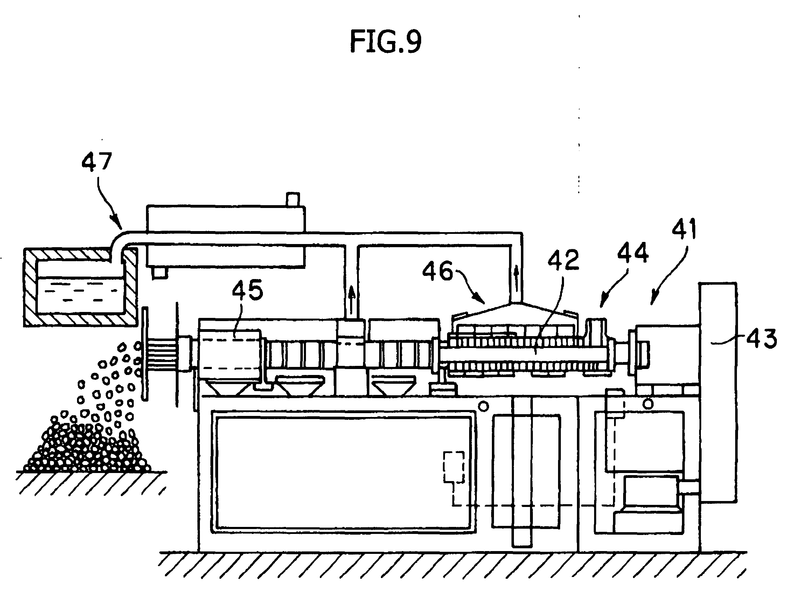

An apparatus for separating and recovering polystyrene and a solvent from a polystyrene solution used in the dissolution method by solvent is disclosed in Japanese Patent Provisional Publication No. 2000-7822. As illustrated in the front view of FIG. 9, the apparatus comprises an extrusion portion having a main shaft screw 42 built in a barrel equipped with a heater; a driving device 43 for rotating the main shaft screw 42 which device is attached at the base end of the main shaft screw 42 to adjust the shape or pitch of the main shaft screw 42 and by turning the screw, to move the resin solution from the base end to the tip while pressurizing, heating, melting and kneading the resin solution and vaporizing the solvent; a resin solution inlet 44 disposed in the vicinity of the base end of the main shaft screw 42; and an extrusion portion 4 attached to the tip for extruding the molten resin. The extrusion portion is equipped with a vaporized solvent recovery portion 46 for collecting, degassing and recovering the solvent separated by vaporization; and a liquefied solvent recovery portion 47 disposed downstream of the vaporized solvent recovery portion 46 for cooling and liquefying the vaporized solvent by a heat exchanger.

The above-described separation and recovery apparatus of polystyrene and solvent from the polystyrene solution as disclosed in Japanese Patent Provisional Publication No. 2000-7822 however involves the following problems.
(1) The polystyrene solution advances in a barrel (cylinder) while being kneaded by a screw. The polystyrene solution falling in the grooves of the screw however must inevitably advance along the screw shaft and is never stirred. Accordingly, the heat from a heater attached to the wall surface of the barrel is not effectively transferred to the polystyrene solution, which disturbs the promotion of the vaporization of the solvent.

The space between the inner wall of the cylinder and the screw becomes smaller as the solution approaches the tip portion. The gas generated by heating of the solvent must inevitably advance toward the outlet while drawing a spiral trace along the screw shaft so that the gas cannot be eliminated easily and is discharged from the outlet of the cylinder without sufficiently accomplishing the separation between the polystyrene and the solvent. The object of the present invention is to overcome the above-described problems of the conventional art. Another object of the present invention is to provide a separation and recovery apparatus of a polystyrene solution facilitating the promotion of the vaporization of a solvent and permitting removal of the vaporized gas efficiently.

US-B1-6 270 330 describes a method for reclaiming waste polystyrene by dissolving crushed waste polystyrene prior to dissolving in a solvent.

US-A-5 824 709 describes methods of recycling waste polymers including polystyrene which method involves initially melting the waste by external heating prior to dissolving.

GB-A-2179886 describes a method and apparatus for the manufacture of foamed thermoplastics materials.

US-A-5 534 207 describes a method and apparatus for forming an article from recycled plastics materials which involves initially melting by heating of a recyclable plastics material.

### SUMMARY OF THE INVENTION

According to the present invention there is provided a method for recycling of expanded polystyrene as defined in claim 1.

The present invention provides a method for recycling expanded polystyrene comprising steps of: reducing a volume of the expanded polystyrene; dissolving the volume-reduced expanded polystyrene in a solvent; extruding the dissolved expanded polystyrene; and producing recycled expanded polystyrene from the extruded product. According to the present invention, in the recycling method of expanded polystyrene, the above-described reducing step preferably comprises volume-reduction by mechanical compression and/or volume-reduction by partial melting at a temperature not greater than 200°C. The solvent used in the dissolving step is preferably a solvent having a boiling point not greater than 150°C, with methylene chloride being especially suited. It is more preferred that the solvent comprises unsaturated hydrocarbon having 5 to 7 carbon atoms and/or epoxide.

Moreover, according to the present invention, the method further comprises a transportation step for transporting the volume-reduced expanded polystyrene after the reducing step to carry out the following steps at another place. It is also possible that the method further comprises a second transportation step for transporting the extruded product after the extruding step to produce recycled expanded polystyrene at another place.

In the method of the present invention, the step before extrusion in recycling of the expanded polystyrene is classified into two steps, that is, a step of reducing a volume and a step of dissolving by solvent, in order to overcome the defects of the heat melting method and dissolution method by solvent. Described specifically, reduction of the molecular weight of the resin occurs in the conventional heat melting method because the resin is susceptible to be heated locally in the extrusion step and is oxidized by the air involved in the resin. It has been found that to overcome the above-described problems, the dissolution method by solvent is excellent in the quality of the product available thereby from the synthetic viewpoint, because it permits smooth heat transfer and does not involve the air in the resin, and it permits removal of foreign matters by filtration.

The dissolution method by solvent is accompanied with such drawbacks that specialized technology or knowledge is necessary for handling or management of solvents, the solvent is lost together with an expanding agent emitted upon the dissolving step, and an extra facility for the solvent is necessary. Operation on a small scale is not economical and a certain scale is necessary for carrying out the dissolving step. Volume reduction is inevitable for suppressing the transportation cost of the expanded polystyrene. In the conventional heat melting method, deterioration in the quality of the regenerated product occurs inevitably. When the solvent is transported to a site where the waste material occurs and when volume reduction is conducted there, a reduction in the transportation cost of the solvent cannot be attained. In addition, there is a problem in handling or management of the solvent during the transportation.

With the foregoing in view, it has been found that the method of the present invention which does not reduce the molecular weight of the resin and can be performed in a solventless manner is most suited for the volume reduction of the expanded polystyrene and the method comprising, after the volume reduction, dissolving the resin in a solvent and treating the solution is an efficient recycling method of expanded polystyrene waste.

The first separation and recovery apparatus of a polystyrene solution according to the present invention is an apparatus wherein the polystyrene solution obtained by dissolving expanded polystyrene in a solvent is made to advance in a cylinder while being heated, so that the solvent is vaporized for recovery and the polystyrene is separated therefrom, comprising: a mixing shaft disposed in the cylinder, comprising mixing impellers being adjacent each other in a shaft direction and being shifted in a circumferential direction.

The second separation and recovery apparatus of a polystyrene solution according to the present invention is an apparatus wherein the polystyrene solution obtained by dissolving expanded polystyrene in a solvent is made to advance in a cylinder while being heated, so that the solvent is vaporized for recovery and the polystyrene is separated therefrom, comprising: a cylinder comprising a first-stage cylinder member and a second-stage cylinder member; and an mixing shaft disposed in the first-stage cylinder member, comprising mixing impellers being adjacent each other in a shaft direction and being shifted in a circumferential direction, wherein the second-stage cylinder member comprising a screw shaft is disposed at right angles with the first-stage cylinder member.

The third separation and recovery apparatus of a polystyrene solution according to the present invention is an apparatus wherein the polystyrene solution obtained by dissolving expanded polystyrene in a solvent is made to advance in a cylinder while being heated, so that the solvent is vaporized for recovery and the polystyrene is separated therefrom, comprising: a cylinder comprising a first-stage cylinder member, a second-stage cylinder member, and a third-stage cylinder member; an mixing shaft disposed in the first-stage cylinder member, comprising mixing impellers being adjacent each other in a shaft direction and being shifted in a circumferential direction, wherein the second-stage cylinder member comprising a screw shaft is disposed at right angles with the first-stage cylinder member, and the third-stage cylinder member comprising a screw shaft is disposed at right angles with the second-stage cylinder member.

In the first separation and recovery apparatus of a polystyrene solution according to the present invention, an mixing shaft comprising mixing impellers being adjacent each other in the shaft direction and being shifted in a circumferential direction is disposed in the cylinder. In the apparatus, therefore, the polystyrene solution can be mixed efficiently and heat conduction from a heaters is promoted, making it possible to accelerate the vaporization of the solvent from the polystyrene solution.

The gas obtained by the vaporization of the solvent can be transferred almost directly along the shaft direction of the cylinder so that polystyrene has been separated from the solvent sufficiently when the gas flows out of the outlet of the cylinder.

In the second separation and recovery apparatus of a polystyrene solution according to the present invention, the second-stage cylinder member equipped with a screw shaft is disposed at right angles with the first-stage cylinder member. This structure makes it possible to cut and extrude the molten polystyrene, which has been fed from the first stage cylinder member, by the screw of the second-stage cylinder member, thereby promoting the vaporization of the remaining solvent.

In the third separation and recovery apparatus of a polystyrene solution according to the present invention, the third-stage cylinder member equipped with a screw shaft is disposed at right angles with the second-stage cylinder member. This structure makes it possible to cut and extrude the molten polystyrene, which has been fed from the second stage cylinder member, by the screw of the third-stage cylinder member, thereby promoting the vaporization of the remaining solvent further.

### BRIEF DESCRIPTION OF THE DRAWINGS

FIG. 1 is a diagram illustrating the method for recycling expanded polystyrene according to the present invention;
FIG. 2 is a longitudinal cross-sectional view illustrating a separation and recovery apparatus of a polystyrene solution according to a first embodiment of the present invention;
FIG. 3 is a longitudinal cross-sectional view of a separation and recovery apparatus of a polystyrene solution according to a second embodiment of the present invention;
FIG. 4 is a plan cross-sectional view of a separation and recovery apparatus of a polystyrene solution according to the second embodiment of the present invention;
FIG. 5 is a view taken along a line of A-A of FIG. 4;
FIG. 6 is a view illustrating the molten polystyrene whittled away by a spiral mixing impeller continuously;
FIG. 7 is a partial plan cross-sectional view illustrating the second-stage and third-stage cylinder member of a separation and recovery apparatus of a polystyrene solution according to a third embodiment of the present invention;
FIG. 8 is a view taken along a line B-B of FIG. 7; and
FIG. 9 is a front view illustrating the conventional polystyrene separation and recovery apparatus.

### DETAILED DESCRIPTION OF THE PREFERRED EMBODIMENT

The embodiments of the present invention will hereinafter be described.

The volume reducing step of the invention comprises volume reduction by mechanical compression and/or volume reduction by partially melting at a temperature not greater than 200°C.

The term "volume reduction by mechanical compression" as used herein means crushing expanded polystyrene waste optionally to a size permitting introduction of it in the subsequent step, followed by compression by a pressing machine or an extruder to partially melt the crushed polystyrene. The term "volume reduction by partially melting at a temperature not greater than 200°C", means partially melting the expanded polystyrene while applying external heat, at a temperature not greater than 200°C during the above-described volume reduction by mechanical compression. By the volume reduction, the apparent density of the expanded polystyrene can be reduced from 0.02 g/cm³, which is a typical density of expanded polystyrene, to about 0.1 to 0.5 g/cm³, preferably about 0.2 to 0.4 g/cm³.

The volume reduction by mechanical compression according to the present invention may partially melt the expanded polystyrene by internal heat such as frictional heat generated upon crushing or compression. However, an increase of the temperature is small in this case compared with the heat melting method and reduction of the molecular weight can be minimized.

Melting of expanded polystyrene usually leads to a rise in its apparent density and advance of volume reduction. However, melting at a too high temperature may cause deterioration of the polystyrene owing to excessive reduction of the molecular weight. The volume reduction by mechanical compression utilizing mainly the internal heat such as frictional heat as in the present invention is advantageous in view of the quality of recycled polystyrene.

When the reduction of the molecular weight is allowed to some extent, the step of volume reducing may be carried out by compressing the polystyrene while partially melting by external heating. In this case, however, melting is preferably performed at a temperature not greater than 200°C, more preferably not greater than 180°C in order to prevent drastic reduction of the molecular weight. External heating may sometimes cause unequal distribution of heat or make partially hot portions. In the present invention, the temperature is based on that of a portion having the highest temperature.

The step of volume reducing can yield a compressed resin ingot. In the step, no solvent is used so that handling of the apparatus and the step itself are relatively easy. In the place where expanded polystyrene waste, which will be a raw material, occurs, volume reducing step can be easily carried out even on a small scale.

The expanded polystyrene having a reduced volume is then dissolved in a solvent. The dissolving step can be carried out in a plant where the volume reduction is conducted. However the step can be carried out more efficiently by transporting the expanded polystyrene to another plant, because the expanded polystyrene has increased transport efficiency by the volume reduction. And then an adequate amount of the expanded polystyrene is collected, they can be dissolved en masse. A solvent-using process requiring special management and equipment for handling the solvent can be carried out efficiently at less frequency in fewer places.

In the dissolving step, since the expanded polystyrene has already a reduced volume, the amount of the solvent released from the apparatus upon dissolution can be decreased to the 1/10 to 1/50 of a solvent used in the recycle of expanded polystyrene not subjected to volume reduction. This makes it possible to reduce the load on a recovery apparatus of the solvent from the released gas, or reduce the loss of the solvent upon the discharge.

In the dissolving step of the present invention, the volume-reduced expanded polystyrene can be dissolved in a solvent by pouring it in the solvent and mixing the mixture. The volume-reduced expanded polystyrene can also be dissolved in the solvent by using a kneader or by putting the expanded polystyrene crushed into a proper size and the solvent in an extruder. By the dissolving step, foreign matters contained in the resin can be filtered off, whereby the foreign matters can be removed easily compared with the heat melting method.

In the dissolving step, any solvent can be used as far as it can dissolve therein the expanded polystyrene. Examples of the solvent include chlorine-based solvents such as methylene chloride and trichloroethylene, limonene, and THF. Solvents having a relatively low boiling point, especially solvents having a boiling point not greater than 150°C are preferred in view of the subsequent solvent evaporation step which can be performed at a low temperature. Methylene chloride having a boiling point of about 40°C is most suited because it is also excellent in dissolving power.

When methylene chloride is used as the solvent, addition of an unsaturated hydrocarbon having 5 to 7 carbon atoms and/or epoxide may prevent deterioration of the solvent even if evaporation and condensation of the solvent are conducted in repetition. In particular, the solvent tends to undergo thermal decomposition, since the extrusion step which will be described later is conducted under relatively high temperature.

Epoxide having a boiling point of from 30 to 90°C is preferably used. Specific examples include propylene oxide, butylene oxide and tetrahydrofuran. These epoxides may be added either singly or in combination with two or more of them. Its amount is from 0.1 to 1.0 weight%, preferably from 0.2 to 0.5 weight%, based on the total solvent weight including methylene chloride and additives such as epoxide. When the amount of the epoxide is too small, it may not effectively maintain the stability of methylene chloride. Too large amounts of the epoxide may be economically disadvantageous.

Examples of the unsaturated hydrocarbon having 5 to 7 carbon atoms include 2-pentene, 2-methyl-2-butene, 2-hexene and 2-heptene. The unsaturated hydrocarbons having 5 to 7 carbon atoms can be added either singly or in combination with two or more of them. The amount may be from 10 to 200 ppm, preferably from 50 to 100 ppm, based on the total solvent weight including methylene chloride and additives such as unsaturated hydrocarbons. When the amount of the unsaturated hydrocarbon having 5 to 7 carbon atoms is less than 10 ppm, it may not contribute to the decomposition suppressive effect of methylene chloride. Amounts exceeding 200 ppm may be, on the other hand, economically disadvantageous, because improvement in the decomposition suppressive effect proportional to such an amount cannot be expected so much.

Removal of the solvent by evaporation and production of pellets may be carried out by the following steps of evaporating the solvent by mixing while feeding a heated extruder or the like with a solution of the expanded polystyrene, and extruding the resin into pellets, beads or needles. In order to remove the solvent by evaporation, heat may be applied from the outside. For preventing the reduction of the molecular weight of the resin, it is preferred to adjust the temperature to 200°C or less, especially 180°C or less.

By extruding the expanded polystyrene dissolved in a solvent, reduction of the molecular weight of the resin can be suppressed and the strength of the recycled product can be maintained at a high level compared with that when the heat melting method is employed.

For the removal of the solvent by evaporation, a separation and recovery apparatus of a polystyrene solution which will be described later can be used. Since the separation and recovery apparatus of a polystyrene solution according to the present invention is, in particular, capable of promoting vaporization of the remaining solvent. The apparatus is preferably employed for the removal of the solvent by evaporation. In addition, the resin can be extruded into strands by using the apparatus.

During the extruding step of the expanded polystyrene dissolved in a solvent, the solution of the expanded polystyrene is evaporated by heating. The solvent recovered by the cold condensation of the resulting vapor can be provided for re-use.

The resulting extruded product can be then optionally transferred to another plant. The product is impregnated with an expanding agent to regenerate expanded polystyrene. Preferably at a plant near a consuming place, expansion and molding of the expanded polystyrene which has been recycled and impregnated with an expanding agent can be carried out. An expanded polystyrene molded product can be obtained as a recycled product. The expanding agent and expansion and molding method may be similar to those employed for polystyrene which is not a recycled product.

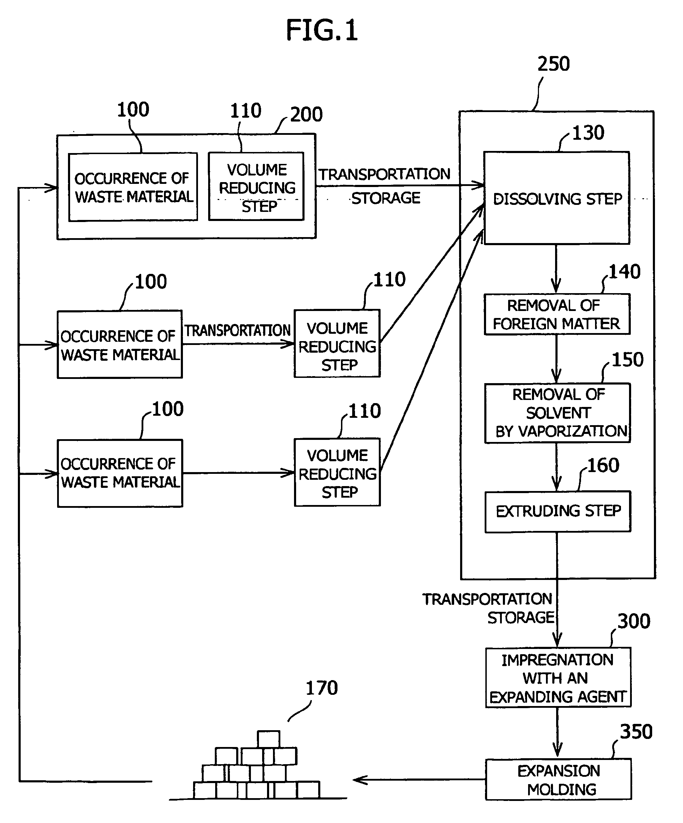

As illustrated in FIG. 1, the volume reducing step and the dissolving step can be carried out at different places according to one embodiment of the present invention. So, a station 110 for the volume reducing step which requires no solvent and can be easily managed may be provided near a place 100 where expanded polystyrene waste occurs. The station 110 of the volume reducing step can also be set up at a site such as plant, mass retailer, wholesaler, distribution basic point and the like where the waste occurs 200. The station can be equipped with a crusher, an extruder, a compressor and the like necessary for the volume reduction of the expanded polystyrene waste. As a result, the transport distance of the waste from the place 100 where the expanded polystyrene waste occurs to the station 110 of the volume reducing step is relatively short. The expanded polystyrene which has a reduced volume and therefore has merits in transport and storage is gathered in a plant 250 where the dissolving step 130 is carried out. In the dissolving step which needs management of a solvent, economy of scale can be gained easily by gathering the expanded polystyrene and treating them en masse. After the dissolving step, a liquid resin composition is produced. The composition can be provided with treatment 140 such as removal of foreign matters through filtration easily. After the removal of the solvent by evaporation 150, the resin is extruded (160).

At the same plant 250 or different plant 300, the pellets obtained by extrusion can be impregnated with an expanding agent. By expanding and molding of the resulting pellets or beads at a plant 350 near the consuming region, a new molded product 170 can be obtained. It is needless to say that steps from the dissolving step 130 to the expanding and molding 350 can be carried out in one place.

After the dissolving step, the polystyrene can be taken out from the polystyrene solution containing pellets of the polystyrene dissolved therein. The solvent is then removed. The separation and recovery apparatus of the polystyrene solution will next be described based on some embodiments.

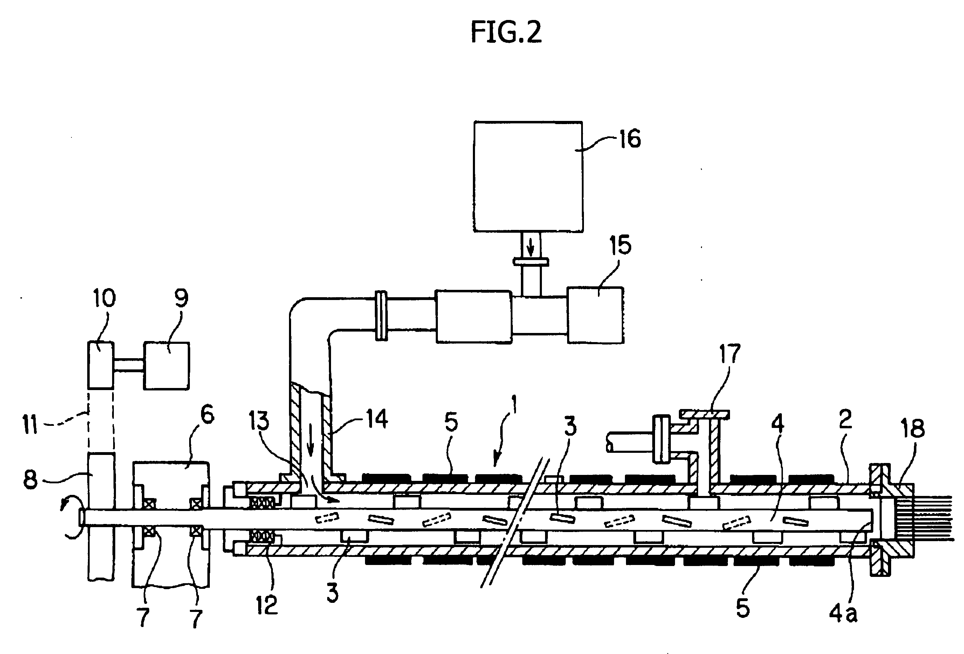

FIG. 2 is a longitudinal cross-sectional view illustrating the separation and recovery apparatus of a polystyrene solution according to the first embodiment of the present invention.

The separation and recovery apparatus 1 of a polystyrene solution is composed mainly of a cylinder member 2, an mixing shaft 4 having a plurality of mixing impellers 3, which shaft is inserted in the cylinder member 2, and a plurality of heaters 5 attached to the outer peripheral surface of the cylinder member 2 along the lengthwise direction thereof, and a driving device of the mixing shaft 4.

The separation and recovery apparatus 1 of a polystyrene solution will next be described more specifically. The mixing shaft 4 is rotatably supported, at one end portion thereof, by a support 6 disposed outside of the cylinder member 2 via a bearing 7. The other end portion is not supported and is a free end 4a. At the outside portion of the support 6 of the mixing shaft 4, a sprocket 8 for rotating the mixing shaft 4 is attached. A driving chain 11 connects between the sprocket 8 and another sprocket 10 attached to the rotating shaft of an electric motor 9 disposed in parallel with the mixing shaft 4, and rotation of the mixing shaft 4 is driven by the electric motor 9.

At the end of the cylinder member 2 on the side of the support 6, a gland packing 12 is attached so that the polystyrene solution to be poured inside of the cylinder member 2 does not leak from the space between the mixing shaft 4 and cylinder member 2. At a position near the gland packing 12 of the cylinder member 2, an inlet 13 for the polystyrene solution is arranged. To the inlet 13, a pouring pipe 14 is connected. By a monopump 15 connected to the pouring pipe 14, the polystyrene solution (obtained by dissolving expanded polystyrene in a solvent such as methylene chloride) stored in the polystyrene solution tank 16 is poured inside of the cylinder member 2.

Near the end portion opposite to the portion to which the gland packing 12 has been attached of the cylinder member 2, a vent tube 17 for removing the gas is connected to remove the gas generated by the vaporization of the solvent in the polystyrene solution.

At the end portion of the mixing shaft 4 of the cylinder member 2 on the side of the free end 4a, a die 18 for extruding the molten polystyrene after the vaporization of the solvent from the polystyrene solution is disposed.

The polystyrene solution poured in the cylinder member 2 is transferred in the cylinder member 2 toward the side of the die 18 under a predetermined pressure, which can be controlled by the monopump 15, while being heated by a plurality of heaters 5 and being mixed with the mixing impellers 3.

When the polystyrene solution is heated by the heaters 5, the solvent becomes a gas by vaporization. The gas is separated from the polystyrene solution, cooled and then recovered. The polystyrene separated from the solvent is melted by heating.

The plurality of mixing impellers 3 attached to the mixing shaft 4 may be positioned so that any two mixing impellers 3 adjacent each other in the shaft direction are shifted by the 1/4 circumference in the circumferential direction. The mixing impellers 3 may be disposed at a proper distance while being shifted in the circumferential direction of the mixing shaft 4 not only by the 1/4 circumference, but also by the 1/6 circumference, by the 1/8 circumference or the like.

The mixing impellers 3 are attached to the mixing shaft 4, with a gradient toward the face running along the axis of the mixing shaft 4. Moreover, the mixing impellers 3 are preferably attached to wrap a certain length of the shaft in the shaft direction.

Since the mixing impellers 3 are attached to the mixing shaft as described above, the polystyrene solution in the cylinder member 2 advances in the cylinder member 2 without leaving an unstirred portion. Heat can be therefore efficiently conducted from the heaters 5 to the polystyrene solution and vaporization of the solvent from the polystyrene solution can be accelerated.

In a mixing structure in which mixing can be carried out by rotating the mixing shaft equipped with the mixing impellers, an adequate distance between any two adjacent mixing impellers enables the gas to reach the gas outlet very easily compared with the conventional apparatus adopting a screw shaft in which a vaporized gas passes through a spiral route along the screw and reaches the gas outlet.

The gas generated by the vaporization of the solvent moves almost directly along the mixing shaft 4 toward the vent tube 17 for gas removal, while flowing through the space between the polystyrene solution, which space is formed by the rotation of the mixing impellers 3. Vaporization of the solvent therefore occurs actively, making it possible to minimize a ratio of the remaining solvent in the resin.

The molten polystyrene after the solvent is vaporized and separated from the polystyrene solution reaches the die 18. By the pressure applied to the polystyrene solution, it is extruded outside the cylinder member 2, as strands, from a plurality of through-holes made in the die 18.

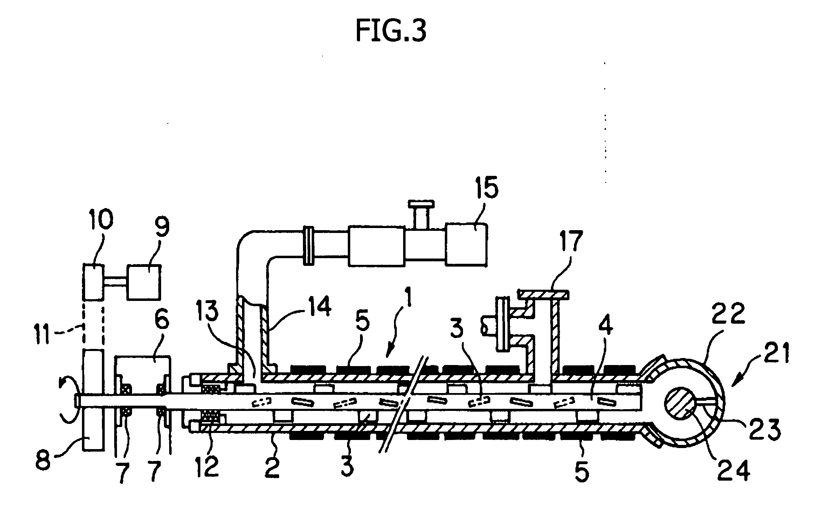

Another separation and recovery apparatus of a polystyrene solution according to the second embodiment of the present invention will hereinafter be described based on FIG. 3.

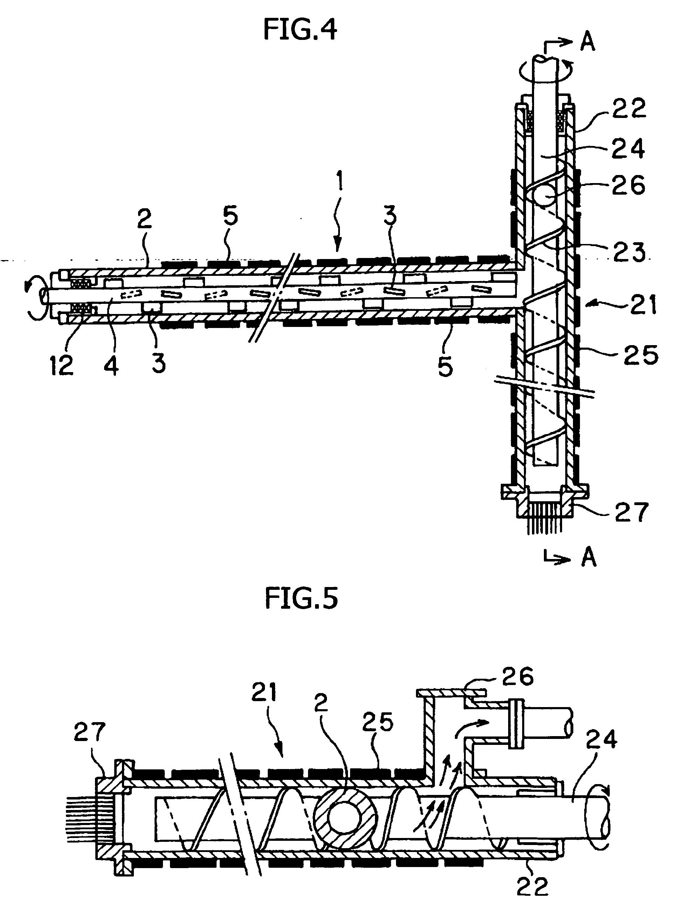

FIG. 3 is a longitudinal cross-sectional view of the separation and recovery apparatus of the polystyrene solution according to the second embodiment of the present invention; FIG. 4 is a plan cross-sectional view of the separation and recovery apparatus of the polystyrene solution according to the second embodiment of the present invention; and FIG. 5 is a view taken along a line A-A of FIG. 4.

The separation and recovery apparatus of a polystyrene solution is similar to the separation and recovery apparatus 1 of a polystyrene solution as described in the first embodiment of the present invention except that a second-stage separation and recovery structure of a polystyrene solution is installed thereto. The members corresponding to the first-stage separation and recovery apparatus 1 of a polystyrene solution will be identified by the same reference numerals as used in FIG. 2 and detailed descriptions will be omitted.

In the separation and recovery apparatus of a polystyrene solution according to the second embodiment, the die 18 at the end portion on the exhaust side of the first-stage cylinder member 2 is replaced by a cylinder member 22 of the second-stage separation and recovery structure 21 of a polystyrene solution to connect them at right angles. The molten polystyrene discharged from the first-stage cylinder member 2 is made to enter into the cylinder member 22 from the upstream of the second-stage cylinder member 22 in the lengthwise direction thereof.

The second-stage separation and recovery structure 21 of a polystyrene solution is composed mainly of the cylinder member 22, an mixing shaft (screw shaft) 24 being inserted in the cylinder member 22 and having a spiral mixing impeller 23, a plurality of heaters 25 attached to the outer peripheral surface of the cylinder member along the lengthwise direction thereof, and a driving device of the mixing shaft 24.

The driving device of the mixing shaft 24 has the same structure as that of the driving device of the mixing shaft 4 of the first-stage separation and recovery apparatus 1 of a polystyrene solution so that it is not illustrated.

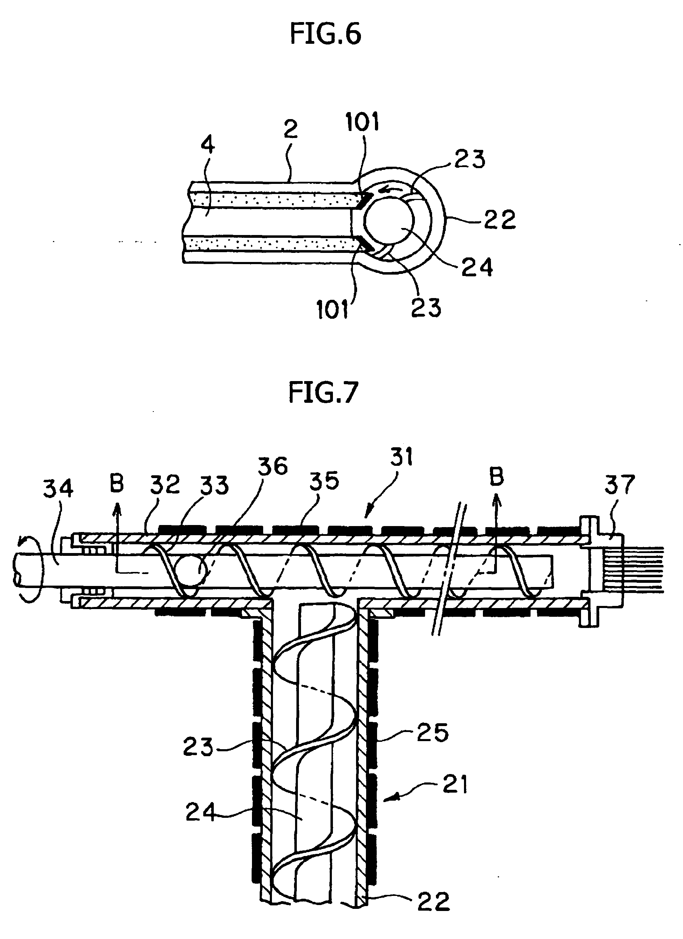

This separation and recovery apparatus of a polystyrene solution is designed to have a higher solvent separating capacity than that of the separation and recovery apparatus of a polystyrene solution according to the first embodiment. The mixing impeller 23 has a spiral form and as illustrated in FIG. 6, the molten polystyrene entering the second-stage cylinder member 22 from the first-stage cylinder member 2 is whittled away by the spiral mixing impeller 23 continuously and a whittled portion 101 extends in strands form.

The second cylinder member is designed to have an inner diameter large enough not to fill it with the molten polystyrene flowing from the first-stage cylinder member into the second-stage cylinder member. This enables the extension of the whittled portion 101 in the strands form, to increase the surface area of the molten polystyrene and to promote the vaporization of the solvent.

The gas generated by the vaporization of the solvent is discharged by its own pressure through the vent tube 25 disposed on the upstream side of the connection between the second-stage cylinder member 22 and the first-stage cylinder member 2.

The molten polystyrene after vaporization and separation of the solvent therefrom advances in the second-stage cylinder member 22 and extruded outside, as strands form, from a plurality of through-holes of the die 27 disposed at the tip of the cylinder 22.

A separation and recovery apparatus of a polystyrene solution according to the third embodiment of the present invention will hereinafter be described based on FIG. 7.

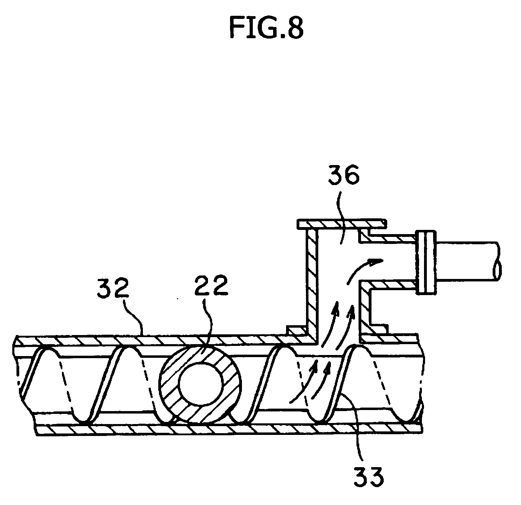

FIG. 7 is a plan cross-sectional view illustrating the second-stage and third-stage of the separation and recovery apparatus of a polystyrene solution according to the third embodiment of the present invention, and FIG. 8 is a view taken along a line B-B of FIG. 7.

The separation and recovery apparatus of a polystyrene solution has the separation and recovery structure 21 of a polystyrene solution as described in the second embodiment of the present invention and a third-stage separation and recovery structure of a polystyrene solution installed thereto. The members corresponding to the second-stage separation and recovery structure 21 of a polystyrene solution will be identified by the same reference numerals as used in FIGS. 3 to 5 and detailed descriptions of them will be omitted.

In the separation and recovery apparatus of a polystyrene solution according to the third embodiment, the die 27 at the end portion on the exhaust side of the second-stage cylinder member 22 of the separation and recovery structure 21 of a polystyrene solution is replaced by a cylinder member 32 of the third-stage separation and recovery structure 31 of a polystyrene solution which is connected to the end portion at right angles. The molten polystyrene discharged from the second-stage cylinder member 22 is made to enter into the cylinder member 32 from the upstream of the third-stage cylinder member 32 in the lengthwise direction thereof.

The third-stage separation and recovery structure 31 of a polystyrene solution is, similar to the second-stage separation and recovery structure 21 of a polystyrene solution, composed mainly of the cylinder member 32, an mixing shaft (screw shaft) 34 being inserted in the cylinder member 32 and having a spiral mixing impeller 33, a plurality of heaters 25 attached to the outer peripheral surface of the cylinder member 32 along the lengthwise direction thereof, and a driving device of the mixing shaft 34.

Since the driving device of the mixing shaft 34 has the same structure as that of the driving device of the mixing shafts 4 and 24 of the first-stage and second-stage separation and recovery apparatuses 1 and 21 of a polystyrene solution, it is not illustrated in detail.

This separation and recovery apparatus of a polystyrene solution is designed to have a higher solvent separating capacity than that of the separation and recovery apparatus of a polystyrene solution according to the second embodiment. The mixing impeller 33 has a spiral form and the molten polystyrene flowing into the third-stage cylinder member 32 from the second-stage cylinder member 22 can be whittled away by the spiral mixing impeller 33 continuously.

The third-stage cylinder member 32 has an inner diameter large enough not to fill it with the molten polystyrene flowing into the third-stage cylinder member 32 from the second-stage cylinder member 22. This can increase the surface area of the molten polystyrene and can promote the vaporization of the solvent.

The gas generated by the vaporization of the solvent is discharged by its own pressure through the vent tube 36 disposed on the upstream of the connection between the third-stage cylinder member 32 and the second-stage cylinder member 22. Alternatively, it is suctioned by a vacuum pump.

The molten polystyrene after vaporization of the solvent can advance in the third-stage cylinder member 32 and extruded outside from a plurality of through-holes of the die 37 disposed at the tip of the cylinder 32 as strands.

In these embodiments, as described above, the separation and recovery apparatus of a polystyrene solution can be used in the recycling method of expanded polystyrene according to the present invention, comprising steps of reducing a volume of the expanded polystyrene; dissolving the volume-reduced expanded polystyrene in a solvent; and separating and removing the solvent from the solution of the expanded polystyrene and extruding the expanded polystyrene. These apparatuses can be used not only for the recycling method of the present invention, but also for the separation of the polystyrene solution into polystyrene and solvent and extrusion of polystyrene.

### Examples

The present invention will hereinafter be described in detail by Examples and Comparative Examples. It should however be noted that the present invention is not limited to or by the following examples.

### [Example 1] (volume reduction by mechanical compression + dissolution method by solvent)

An expanded polystyrene molded or formed product was crushed into a size of an egg, followed by volume reduction of the expanded polystyrene molded or formed product by compression using a screw type extruder equipped with a conical cylinder having, at the tip portion thereof, an internal diameter of 2.5 cm. The resin extruded from the tip of the extruder had an apparent density of 0.2 g/cm³ after the volume reduction by compression, with one outside portion being molten by the frictional heat in the extruder but a large portion being unmelted. The resulting volume-reduced resin was poured in methylene chloride (temperature: 15°C) filled in a container equipped with a mixer to dissolve the resin under atmospheric pressure. The resin was dissolved while emitting bubbles in the container and finally, a solution having a resin concentration of 40 weight% was obtained. The bubbles emitted during the dissolution were released to the air from the nozzle of the container. The amount of methylene chloride which was released to the air together with the gas was determined by weighing the solution before and after the dissolution. The solution thus obtained was fed to the separation and recovery apparatus of a polystyrene solution according to the first embodiment which had therein an exhaust port for discharging the vapor of methylene chloride. By heating with a heater placed at the outer cylinder member of the extruder, the methylene chloride was removed by evaporation. The highly-viscous molten resin was extruded from the die attached to the separation and recovery apparatus of a polystyrene solution according to the first embodiment, whereby recycled pellets were produced. The temperature of the extruder was, in the vicinity of the tip, 180°C at the maximum.

### [Example 2 (volume reduction with partial melting + dissolution method by solvent)]

By using a similar extruder to that used in Example 1, expanded polystyrene was extruded and partially molten under external heating at a temperature of 180°C. As a result, a resin ingot containing many bubbles therein and had been, for the most part, volume-reduced by compression in the unmelted form was obtained from the tip of the extruder. The resin ingot had an apparent density of 0.4 g/cm³.

The resin ingot was then dissolved in methylene chloride. The resulting methylene chloride solution had a resin concentration of about 40 weight%. The solution was treated in a similar manner to Example 1, whereby recycled pellets were produced.

### [Comparative Example 1 (heat melting method)]

Expanded polystyrene was thrown to a screw extruder. Recycled pellets were produced by melting the expanded polystyrene by heating with a heater disposed at an outer cylinder member, extruding the molten resin into strands having a diameter of 2 mm from the dies of a porous plate at the tip of the extruder, and cutting the strands by a pelletizer. Sufficient heating time in the extruder was necessary in order to dissolve the polystyrene as complete as possible and leave no bubbles in the resin. The recycled pellets had a density of about 1.0 g/cm³.

### [Comparative Example 2 (dissolution method by solvent)]

An expanded polystyrene molding was crushed into a proper size and dissolved in methylene chloride as in Example 1. At the initial stage of the dissolution, the expanded polystyrene dissolved actively in the solvent while emitting a large amount of bubbles of an expanding gas, compared with Example 1. With a rise in the resin concentration, however, the dissolution rate lowered gradually. At the end, a solution having a resin concentration of about 40 weight% was obtained. The resulting solution was treated in a similar manner to Example 1, whereby recycled pellets were produced.

The results of the lost amount of methylene chloride and weight average molecular weight of the recycled pellets as measured by GPC were described below. The lost amount of methylene chloride indicated below was the amount per kg of the resin dissolved therein.

| Example | | Weight average molecular weight | Lost amount of methylene chloride |
|---|---|---|---|
| Ex. 1 | Volume reduction by mechanical compression + dissolution method by solvent | 287 thousand | 5g |
| Ex. 2 | Volume reduction with partial melting + dissolution method by solvent | 250 thousand | 3g |
| Comp. Ex. 1 | Heat melting method | 185 thousand | - |
| Comp. Ex. 2 | Dissolution method by solvent | 293 thousand | 50 g |
| Control | Expanded polystyrene as raw material | 305 thousand | - |

From the above-described results, it has been found that the recycled pellets obtained in Comparative Example 1 had a weight average molecular weight lower than that corresponding to the strength usually required for recycled pellets (200 to 250 thousand). This suggests that the recycled pellets obtained in Comparative Example 1 have a problem in the quality suited for recycling use of expanded polystyrene; resins having a high weight average molecular weight and therefore showing a strength sufficient for practical use were produced in Example 1 by using volume reduction by mechanical compression and dissolution by solvent in combination or in Example 2 by using volume reduction by compression with partial melting and dissolution by solvent in combination. The above-described results have revealed that recycled expanded polystyrene having a high weight average molecular weight and therefore being suited for practical use can be obtained by the method using volume reduction and dissolution method by solvent in combination.

The recycled pellets obtained in Comparative Example 2 had no problem in their quality. However, the amount of the vapor of the solvent released out of the apparatus together with an expanding gas in the volume reducing step is considerably great compared with that in Example 1. This leads to such disadvantages as an increase in the consumption amount of the solvent or requirement of a large apparatus for recovering the solvent from the released gas.

### [Example 3]

In a similar manner to Example 1 except that 0.5 weight% of propylene oxide and 0.01 weight% of 2-pentene were added as additives to methylene chloride serving as a solvent to dissolve expanded polystyrene therein, recycled pellets were produced. The vapor of the solvent removed by evaporation in the separation and recovery apparatus of a polystyrene solution according to the first embodiment was subjected to cold condensation. The concentration of hydrogen chloride existing in the condensate was measured. As a control, the concentration of hydrogen chlorine when the solvent was composed solely of methylene chloride was measured similarly. As a result, when the solution contained only methylene chloride, the concentration of hydrogen chloride was 0.012 weight%, while when propylene oxide and 2-pentene were added to the solution, the concentration of hydrogen chloride was 0.0003 weight%, suggesting that the addition of the additives prevented the deteriorating decomposition of methylene chloride.

### INDUSTRIAL APPLICABILITY

As described above in detail, the present invention enables efficient recycling of expanded polystyrene waste while alleviating the problems such as difficulty in the removal of foreign matters, reducing of the molecular weight owing to heating in the extrusion step, and moreover discharge of the vapor of the solvent out of the apparatus together with a gas emitted during the solvent-dissolving and volume-reduction step and loss of the solvent due to the discharge.

The present invention also makes it possible to prevent, by adding additives to methylene chloride, which is a suitable solvent for dissolving expanded polystyrene therein, deterioration and decomposition of the solvent due to heat and thereby promoting recycling use thereof. The recycling use of the solvent enables suppression of the whole cost of this recycling method and actualizes economical recycling.

In addition, the volume reducing step and dissolving step can be carried out at different sites so that a station for the volume reducing step which does not use a solvent and therefore needs simple management can be disposed near the place where the expanded polystyrene waste occurs. Expanded polystyrene which has been made suitable for transport by the volume reduction can be gathered in a plant where the dissolving step is performed without transporting the solvent and the polystyrene. In the dissolving step which needs management of solvents, economy of scale can be gained easily by gathering a large amount of expanded polystyrene and treating them en masse. Accordingly, the efficiency of recycling treatment of expanded polystyrene waste shows a drastic improvement.

By the separation and recovery apparatus of a polystyrene solution according to the present invention, the solvent can be vaporized efficiently from the polystyrene solution and polystyrene can be obtained stably by extrusion while minimizing the remaining amount of the solvent in the polystyrene resin.

## Claims

1. A method for recycling expanded polystyrene comprising steps of:
reducing a volume (110) of the expanded polystyrene ;
dissolving (13) the volume-reduced expanded polystyrene in a solvent by pouring the volume-reduced expanded polystyrene resin in the solvent and mixing the dissolved polystyrene solution;
evaporating (150) the solvent to be separated from a polystyrene resin by heating the polystyrene solution to a temperature of 200°C or less and extruding the polystyrene resin to produce an extruded product
the method being **characterised by** the volume reduction step being carried out by compression by an extruder to partially melt the expanded polystyrene without external heating to produce compressed resin ingot which is dissolved in the solvent.

2. A method according to claim 1 wherein the evaporating and extruding steps comprise:
providing the polystyrene solution with a separation and recovery apparatus for the polystyrene solution comprising a cylinder (2) in which a mixing shaft (4) is disposed, the mixing shaft comprising mixing impellers (3) adjacent each other in the shaft direction and being shifted in a circumferential direction;
making the polystyrene solution advance in the cylinder (2) whilst being heated to a temperature of 200°C or less, so that the solvent is vaporised to be separated from the polystyrene resin; and
extruding (18) the polystyrene resin to produce the extruded product.

3. A method according to claim 1 wherein the evaporating and extruding steps comprise:
providing the polystyrene solution with a separation and recovery apparatus for the polystyrene solution, the apparatus comprising a first-stage cylinder member (2) and a second-stage cylinder member (22); a mixing shaft (4) disposed in the first-stage cylinder member (2), the shaft comprising mixing impellers (3) adjacent each other in a shaft direction and being shifted in a circumferential direction, wherein the second-stage cylinder member (22) comprises a screw shaft (24) disposed at right angles to the first-stage cylinder member (2);
making the polystyrene solution advance in the cylinder while being heated to a temperature of 200°C or less, so that the solvent is vaporised and separated from the polystyrene resin; and
extruding (27) the polystyrene resin to produce the extruded product.

4. A method according to claim 1 wherein the evaporating and extruding step comprises:
providing the polystyrene solution with a separation and recovery apparatus for the polystyrene solution, the apparatus comprising a first-stage cylinder member (2), a second-stage cylinder member (22), and a third-stage cylinder member (32); a mixing shaft (4) disposed in the first-stage cylinder member, the shaft comprising mixing impellers (3) adjacent each other in a shaft direction and being shifted in a circumferential direction; the second-stage cylinder member (22) comprising a screw shaft (24) disposed at right angles to the first-stage cylinder member (2); and the third-stage cylinder member (32) comprising a screw shaft (34) disposed at right angles to the second-stage cylinder member (22);
making the polystyrene solution advance in the cylinder while being heated to a temperature of 200°C or less, so that the solvent is vaporised and separated from the polystyrene resin; and
extruding (37) the polystyrene resin to produce the extruded product.

5. A method according to any one of claims 1 to 4, further comprising a step of producing recycled expanded polystyrene product from the extruded product.

6. A method according to any one of claims 1 to 4, wherein the solvent used in the dissolving step has a boiling point not greater than 150°C.

7. A method according to claim 6, wherein the solvent used in the dissolving step is methylene chloride.

8. A method according to claim 7, wherein the solvent further comprises unsaturated hydrocarbon having 5 to 7 carbon atoms and/or epoxide.

9. A method according to claim 1, further comprising a first transportation step for transporting the compressed ingot of the volume-reduced expanded polystyrene to carry out the dissolving step at a place (250) different from the volume reducing step (200).

10. A method according to claim 5, further comprising a second transportation step for transporting the extruded product to carry out the step of producing recycled expanded polystyrene product at a place (300) different from the evaporating and the extruding step (250).

11. A method according to claim 10, further comprising a step of impregnating the extruded product with an expanding agent and a third transportation step for transporting the product to carry out the step (350) of producing recycled expanded polystyrene product at a place different from the impregnating step (300).

## Patentansprüche

1. Verfahren zum Recyceln von geschäumtem Polystyrol, umfassend die Schritte:
Reduzieren eines Volumens (110) des geschäumten Polystyrols;
Lösen (13) des Volumen-reduzierten, geschäumten Polystyrols in einem Lösungsmittel durch Gießen des Volumen-reduzierten, geschäumten Polystyrols in das Lösungsmittel und Mischen der gelösten Polystyrollösung;
Abdampfen (150) des von einem Polystyrolharz zu trennenden Lösungsmittels durch Erwärmen der Polystyrollösung auf eine Temperatur von 200°C oder weniger und
Extrudieren des Polystyrolharzes, um ein extrudiertes Produkt herzustellen,
wobei das Verfahren **dadurch gekennzeichnet ist, daß** der Volumenreduktionsschritt durch Komprimieren in einem Extruder ausgeführt wird, um das geschäumte Polystyrol ohne externe Erwärmung teilweise zu schmelzen und so eine komprimierte Harzmasse herzustellen, die in dem Lösungsmittel gelöst wird.

2. Verfahren nach Anspruch 1, bei dem die Abdampf- und Extrudierschritte die Schritte umfassen:
Bereitstellen der Polystyrollösung mit einer Trenn- und Rückgewinnungsvorrichtung für die Polystyrollösung, umfassend einen Zylinder (2), in dem eine Mischwelle (4) angeordnet ist, die Mischflügel (3) umfaßt, welche in Wellenrichtung einander benachbart angeordnet sind und in Umfangsrichtung verschoben sind;
Herstellen der Polystyrollösung vorab im Zylinder (2) unter gleichzeitigem Erwärmen auf eine Temperatur von 200°C oder weniger, so daß das Lösungsmittel abgedampft wird, um vom Polystyrolharz abgetrennt zu werden, und
Extrudieren (18) des Polystyrolharzes, um das extrudierte Produkt herzustellen.

3. Verfahren nach Anspruch 1, bei dem die Abdampf- und Extrudierschritte die Schritte umfassen:
Bereitstellen der Polystyrollösung mit einer Trenn- und Rückgewinnungsvorrichtung für die Polystyrollösung, wobei die Vorrichtung umfaßt: ein Zylinderteil (2) einer ersten Stufe und ein Zylinderteil (22) einer zweiten Stufe, eine Mischwelle (4), die im Zylinderteil (2) der ersten Stufe angeordnet ist, wobei die Welle Mischflügel (3) umfaßt, die in einer Wellenrichtung einander benachbart angeordnet sind und in einer Umfangsrichtung verschoben sind, wobei das Zylinderteil (22) der zweiten Stufe eine Schneckenwelle (24) umfaßt, die im rechten Winkel zum Zylinderteil (2) der ersten Stufe angeordnet ist;
Herstellen der Polystyrollösung vorab im Zylinder (2) unter gleichzeitigem Erwärmen auf eine Temperatur von 200°C oder weniger, so daß das Lösungsmittel abgedampft wird, um vom Polystyrolharz getrennt zu werden, und
Extrudieren (27) des Polystyrolharzes, um das extrudierte Produkt herzustellen.

4. Verfahren nach Anspruch 1, bei dem der Abdampf- und Extrudierschritt die Schritte umfaßt:
Bereitstellen der Polystyrollösung mit einer Trenn- und Rückgewinnungsvorrichtung für die Polystyrollösung, wobei die Vorrichtung umfaßt: ein Zylinderteil (2) einer ersten Stufe, ein Zylinderteil (22) einer zweiten Stufe und ein Zylinderteil (32) einer dritten Stufe, eine Mischwelle (4), die im Zylinderteil der ersten Stufe angeordnet ist und Mischflügel (3) umfaßt, die in Wellenrichtung einander benachbart angeordnet sind und in einer Umfangsrichtung verschoben sind, wobei das Zylinderteil (22) der zweiten Stufe eine Schneckenwelle (24) umfaßt, die im rechten Winkel zum Zylinderteil (2) der ersten Stufe angeordnet ist, und das Zylinderteil (32) der dritten Stufe eine Schneckenwelle (34) umfaßt, die im rechten Winkel zum Zylinderteil (22) der zweiten Stufe angeordnet ist;
Herstellen der Polystyrollösung vorab im Zylinder (2) unter gleichzeitigem Erwärmen auf eine Temperatur von 200°C oder weniger, so daß das Lösungsmittel abgedampft und vom Polystyrolharz getrennt wird, und
Extrudieren (37) des Polystyrolharzes, um das extrudierte Produkt herzustellen.

5. Verfahren nach einem der Ansprüche 1 bis 4, ferner umfassend einen Schritt zur Herstellung eines recycelten, geschäumten Polystyrolproduktes aus dem extrudierten Produkt.

6. Verfahren nach einem der Ansprüche 1 bis 4, bei dem das im Löseschritt verwendete Lösungsmittel einen Siedepunkt von nicht mehr als 150°C aufweist.

7. Verfahren nach Anspruch 6, bei dem das im Löseschritt verwendete Lösungsmittel Methylenchlorid ist.

8. Verfahren nach Anspruch 7, bei dem das Lösungsmittel ferner ungesättigten Kohlenwasserstoff mit 5 bis 7 Kohlenstoffatomen und/oder Epoxid umfaßt.

9. Verfahren nach Anspruch 1, ferner umfassend einen ersten Transportschritt zum Transportieren der komprimierten Masse aus geschäumtem Polystyrol mit reduziertem Volumen, um den Löseschritt an einer anderen Stelle (250) als den Volumenreduzierschritt (200) auszuführen.

10. Verfahren nach Anspruch 5, ferner umfassend einen zweiten Transportschritt zum Transportieren des extrudierten Produktes, um den Schritt der Herstellung des recycelten, geschäumten Polystyrolproduktes an einer anderen Stelle (300) als den Abdampf- und Extrudierschritt (250) auszuführen.

11. Verfahren nach Anspruch 10, ferner umfassend einen Schritt des Imprägnierens des extrudierten Produktes mit einem Aufschäummittel und einen dritten Transportschritt zum Transportieren des Produktes, um den Schritt (350) zur Herstellung des recycelten, geschäumten Polystyrolproduktes an einer anderen Stelle als den Imprägnierschritt (300) auszuführen.

## Revendications

1. Procédé pour le recyclage de polystyrène expansé comprenant les étapes de :
- réduire un volume (110) du polystyrène expansé ;
- dissoudre (13) le polystyrène expansé à volume réduit dans un solvant en versant la résine polystyrène expansée volume réduit dans le solvant et en mélangeant la solution polystyrène dissoute ;
- évaporer (150) le solvant destiné à être séparé de la résine polystyrène par chauffage de la solution polystyrène à une température de 200°C ou moins, et extruder la résine polystyrène pour produire un produit extrudé ;
le procédé étant **caractérisé par** l'étape de réduction de volume mise en oeuvre par compression à l'aide d'un extrudeur pour faire fondre partiellement le polystyrène expansé sans chauffage externe pour produire un ingot de résine compressé qui est dissout dans le solvant.

2. Procédé selon la revendication 1, **caractérisé en ce que** les étapes d'évaporation et d'extrusion comportent :
- mettre en place un appareil de séparation et de récupération pour la solution de polystyrène, comprenant un cylindre (2) dans lequel un arbre de mélange est disposé, ce dernier comprenant des pales de mélange (3) adjacentes l'une à l'autre dans la direction de l'arbre et étant décalées dans une direction circonférentielle ;
- faire en sorte que la solution polystyrène avance dans le cylindre (2) tout en étant chauffée à une température de 200 °C ou moins, de façon que le solvant soit vaporisé et destiné à être séparé de la résine polystyrène ; et
- extruder (18) la résine polystyrène pour produire le produit extrudé.

3. Procédé selon la revendication 1, **caractérisé en ce que** les étapes d'évaporation et d'extrusion comportent :
- prévoir un appareil de séparation et de récupération pour la solution de polystyrène, l'appareil comprenant un élément (2) de cylindre de première étape, et un élément (2) de cylindre de seconde étape, un arbre de mélange (4) disposé dans ledit élément (2) de cylindre de première étape, l'arbre comprenant des pales de mélange (3) adjacentes l'une à l'autre dans une direction de l'arbre, et étant décalées dans une direction circonférentielle, tandis que l'élément (2) de cylindre de seconde étape comporte un arbre à vis (24) disposé à angle droit par rapport à l'élément (2) de cylindre de première étape ;
- faire en sorte que la solution de polystyrène avance dans le cylindre tout en étant chauffée à une température de 200 °C ou moins, de façon que le solvant est vaporisé et séparé de la résine polystyrène ; et
- extruder (27) la résine polystyrène pour produire le produit extrudé.

4. Procédé selon la revendication 1, **caractérisé en ce que** les étapes d'évaporation et d'extrusion comportent :
- prévoir un appareil de séparation et de récupération pour la solution de polystyrène, l'appareil comprenant un élément (2) de cylindre de première étape, et un élément (22) de cylindre de seconde étape, et un élément (32) de cylindre de troisième étape, un arbre de mélange (4) disposé dans l'élément de cylindre de première étape, l'arbre comprenant des pales de mélange (3) adjacentes l'une à l'autre dans une direction de l'arbre, et étant décalées en direction circonférentielle ; l'élément (22) de cylindre de seconde étape comprenant un arbre à vis (24) disposé à angle droit par rapport à l'élément (2) de cylindre de première étape, et l'élément (32) de cylindre de troisième étape comprenant un arbre à vis (34) disposé à angle droit par rapport à l'élément (22) de cylindre de seconde étape ;
- faire en sorte que la solution de polystyrène avance dans le cylindre tout en étant chauffée à une température de 200°C ou moins, de façon que le solvant soit vaporisé et séparé de la résine polystyrène ; et
- extruder (37) la résine polystyrène pour produire le produit extrudé.

5. Procédé selon l'une des revendications 1 à 4, **caractérisé en ce qu'**il comporte en outre une étape de produire un produit polystyrène expansé recyclé à partir du produit extrudé.

6. Procédé selon l'une des revendications 1 à 4, **caractérisé en ce que** le solvant utilisé dans l'étape de dissolution présente un point d'ébullition inférieur à 150°C.

7. Procédé selon la revendication 6, **caractérisé en ce que** le solvant utilisé dans l'étape de dissolution est du chlorure de méthylène.

8. Procédé selon la revendication 7, **caractérisé en ce que** le solvant comporte en outre un hydrocarbone insaturé ayant 5 à 7 atomes de carbone et/ou epoxide.

9. Procédé selon la revendication 1, **caractérisé en ce qu'**il comporte en outre une première étape de transport pour transporter l'ingot compressé dans le polystyrène expansé à volume réduit pour réaliser l'étape de dissolution à un endroit (250) différent de l'étape de réduction de volume (200).

10. Procédé selon la revendication 5, **caractérisé en ce qu'**il comporte une seconde étape de transport pour transporter le produit extrudé pour mettre en oeuvre l'étape de production du produit de polystyrène expansé recyclé à un endroit (300) différent de l'étape d'évaporation et d'extrusion (250).

11. Procédé selon la revendication 10, **caractérisé en ce qu'**il comporte en outre une étape d'imprégnation du produit extrudé avec un agent d'expansion et une troisième étape de transport pour transporter le produit afin de mettre en oeuvre l'étape (350) de produire un produit à base de polystyrène expansé recyclé, à un endroit différent de l'étape d'imprégnation (300).
